# EUROPEAN PATENT APPLICATION

(11) **EP 4 087 206 A1**
(43) Date of publication of application: **09.11.2022**
(21) Application number: 20917580.1
(22) Date of filing: 05.02.2020
(51) Int. Cl.: H04L 29/06, H04L 29/08

(54) **INTERNET-OF-THINGS DEVICE REGISTRATION METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Jun, Dongguan, Guangdong 523860 (CN)
(74) Representative: Taor, Simon Edward William
(86) International application number: PCT/CN2020/074359
(87) International publication number: WO 2021/155515

(57) **Abstract**

The present disclosure relates to the technical field of the Internet of Things (IoT), and provides an IoT device registration method and apparatus, a device, and a storage medium. The method includes: receiving a first registration request from an IoT device. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

## Description

### TECHNICAL FIELD

The present disclosure relates to communication technology, and more particularly, to an Internet-of-Things (IoT) device registration method and apparatus, a device, and a storage medium.

### BACKGROUND

Currently, Internet-of-Things (IoT) technology is widely used in daily lives. The communication devices involved in the IoT can generally be referred to as IoT devices, and the IoT devices in one local area network can communicate with each other directly. However, IoT devices that are not in a same local area network need to perform remote communication via a cloud platform. For this purpose, the IoT devices need to be registered with the cloud platform in advance.

In the related art, an IoT device is generally equipped with a configurator, which can provide the IoT device with access configuration information for accessing the cloud platform, such that the IoT device can be registered with the cloud platform based on the access configuration information. Currently, how to use the configurator to control the IoT device to be registered quickly with the cloud platform has become a research hotspot.

### SUMMARY

The embodiments of the present disclosure provide an Internet-of-Things (IoT) device registration method and apparatus, a device, and a storage medium, capable of solving the problem regarding how to use a configurator to control an IoT device to be registered quickly with a cloud platform. The technical solutions are as follows.

In an aspect, an IoT device registration method is provided. The method is applied in a cloud platform. The method includes: receiving a first registration request from an IoT device, the first registration request carrying access configuration information and a target device identifier of the IoT device, the access configuration information being provided by a configurator for the IoT device, the access configuration information comprising a first access token and/or a first user identifier of a user account used by the configurator; determining a user identifier to be associated based on the access configuration information; and associating the user identifier to be associated with the target device identifier.

In another aspect, an IoT device registration method is provided. The method is applied in a configurator. The method includes: acquiring access configuration information, the access configuration information comprising a first access token and/or a first user identifier of a user account used by the configurator; and transmitting an access instruction message to an IoT device, the access instruction message carrying at least the access configuration information and being used for instructing the IoT device to be registered with a cloud platform based on the access configuration information.

In another aspect, an IoT device registration apparatus is provided. The apparatus is applied in a cloud platform. The apparatus includes: a receiving module configured to a first registration request from an IoT device, the first registration request carrying access configuration information and a target device identifier of the IoT device, the access configuration information being provided by a configurator for the IoT device, the access configuration information comprising a first access token and/or a first user identifier of a user account used by the configurator; a determining module configured to determine a user identifier to be associated based on the access configuration information; and an associating module configured to associate the user identifier to be associated with the target device identifier.

In another aspect, an IoT device registration apparatus is provided. The apparatus is applied in a configurator. The apparatus includes: an acquiring module configured to acquire access configuration information, the access configuration information comprising a first access token and/or a first user identifier of a user account used by the configurator; and a transmitting module configured to transmit an access instruction message to an IoT device, the access instruction message carrying at least the access configuration information and being used for instructing the IoT device to be registered with a cloud platform based on the access configuration information.

In another aspect, a device is provided. The device includes a processor and a memory. The memory stores at least one instruction executable by the processor to implement the method according to any of the one aspect or the other aspect as described above.

In another aspect, a computer-readable storage medium is provided. The computer-readable storage medium stores at least one instruction executable by the processor to implement the method according to any of the one aspect or the other aspect as described above.

In another aspect, a computer program product is provided. The computer program product includes one or more computer programs which, when executed by a processor, implement the method according to any of the one aspect or the other aspect as described above.

The solutions according to the embodiments of the present disclosure have at least the following advantageous effects.

A first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

### BRIEF DESCRIPTION OF DRAWINGS

In order to describe the technical solutions in the embodiments of the present disclosure more clearly, the drawings to be used in the description of the embodiments will be briefly introduced below. Obviously, the drawings in the following description are only some embodiments of the present disclosure, and other drawings can be obtained by those of ordinary skill in the art based on these drawings without any inventive efforts.
FIG. 1 is a schematic diagram showing an implementation environment according to an exemplary embodiment of the present disclosure;
FIG. 2 is a flowchart illustrating an IoT device registration method according to an exemplary embodiment of the present disclosure;
FIG. 3 is a flowchart illustrating an IoT device registration method according to another exemplary embodiment of the present disclosure;
FIG. 4 is a flowchart illustrating an IoT device registration method according to yet another exemplary embodiment of the present disclosure;
FIG. 5 is a schematic diagram showing a structure of an IoT device registration apparatus according to an exemplary embodiment of the present disclosure;
FIG. 6 is a schematic diagram showing a structure of an IoT device registration apparatus according to another exemplary embodiment of the present disclosure; and
FIG. 7 is a schematic diagram showing a structure of a device according to another exemplary embodiment of the present disclosure.

### DESCRIPTION OF EMBODIMENTS

The embodiments of the present disclosure will be further described in detail below with reference to the accompanying drawings, such that the objects, technical solutions, and advantages of the present disclosure will become more apparent.

Before introducing an Internet-of-Things (IoT) device registration method according to the embodiments of the present disclosure, the application scenario and implementation environment involved in the embodiments of the present disclosure will be introduced briefly.

First, the application scenario involved in the embodiments of the present disclosure will be introduced briefly.

In the IoT scenario, the traffic interaction between IoT devices can be achieved by resource operations such as creating, reading, updating, deleting, or notifying resources. Here, IoT devices that provide resources are called servers, and IoT devices that access resources are called clients. For example, a terminal that obtains indoor environmental status data is a client, and a sensor device that monitors the indoor environmental status data is a server. During the interaction process, the client can transmit a resource operation request to the server to perform an operation on the resources on the server, and the server can perform the corresponding operation according to the resource operation request, and then return a resource operation response to the client. The resource operation response can carry description information of the resource, such as temperature, humidity, and the like, so as to achieve interaction between the IoT devices.

In some scenarios, if multiple IoT devices are not in the same local area network or are far away from each other, remote communication needs to be provided via a cloud platform. In order to be able to communicate remotely via the cloud platform, IoT devices need to be registered with the cloud platform. In the current registration process, a configurator is registered with the cloud platform to obtain a configurator access token, uses the configurator access token to request the cloud platform to allocate a device access token for an IoT device to be registered, and then transmits the device access token to the IoT device to be registered, such that the IoT device can be registered with the cloud platform based on the device access token.

However, in the above implementation, the configurator needs to obtain the configurator access token in advance, and then request the device access token from the cloud platform for the IoT device to be registered, such that the IoT device can continue the registration process subsequently, resulting in a cumbersome registration process. Especially when a number of IoT devices need to be registered, the configurator needs to obtain a device access token for each IoT device from the cloud platform, resulting in low registration efficiency. To this end, the embodiments of the present disclosure provide an IoT device registration method, which can mitigate the above defects, and for its specific implementation, reference can be made to the following embodiments.

Next, the implementation environment involved in the embodiments of the present disclosure will be introduced briefly.

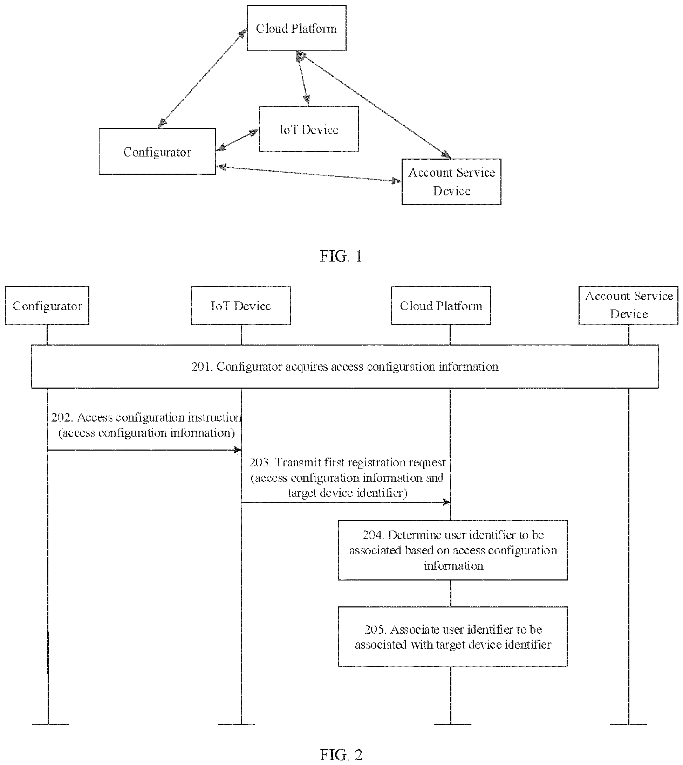

Referring to FIG. 1, which is a schematic diagram showing an implementation environment according to an exemplary embodiment, the implementation environment mainly includes a configurator, an IoT device, a cloud platform, and an account service device. The cloud platform can communicate with the configurator, the IoT device, and the account service device, respectively, and the configurator can also communicate with the IoT device and the account service device, respectively.

The configurator can be configured to provide the IoT device with access configuration information for accessing the cloud platform. As an example, in terms of product form, the configurator can be an Application (APP) or software installed in a terminal, which is typically provided by the same vendor as the IoT device.

The IoT device includes a server or a client. That is, for remote communication via the cloud platform, both the server and the client are typically required to be registered with the cloud platform.

The account service device may be configured to provide a user account management service. The account service device may belong to the same operator as the cloud platform, or the account service device may be provided by a third party. Generally, the configurator needs to log in the user account or perform Oauth authorization before configuring the access configuration information for the IoT device. During this process, it needs to successfully log in the user account or perform the Oauth authorization via the account service device before performing the subsequent steps (see below for details).

The above cloud platform may be a server, or the cloud platform may be a server cluster composed of multiple servers, and the embodiment of the present disclosure is not limited to any of these examples.

After the application scenario and implementation environment involved in the embodiments of the present disclosure have been introduced, an IoT device registration method according to the embodiment of the present disclosure will be described in detail below with reference to the accompanying drawings.

Referring to FIG. 2, which is a flowchart illustrating an IoT device registration method according to an exemplary embodiment. The method can be applied in the implementation environment shown in FIG. 1, and the method can include the following implementation steps.

At step 201, a configurator acquires access configuration information. The access configuration information includes a first access token and/or a first user identifier of a user account used by the configurator.

Here, the first access token is associated with identity information or access information related to the user account, and can be used to verify the user identity and user access instead of the user account and password.

The first user identifier corresponds to the user account. In general, the first user identifier is invisible to the user, i.e., allocated for the user account and then stored and managed by an account service device.

Further, in a specific implementation, the configurator acquiring the access configuration information may include: logging in or performing third-party authorization and authentication in an account service device based on the user account; and receiving the access configuration information transmitted by the account service device.

In an implementation, if it is needed to use the configurator to configure an IoT device such that the IoT device is registered with the cloud platform, for example, for a newly purchased IoT device, when registration is required, the user can use the configurator to log in to the user account or perform Oauth authorization on the account service device. After the login or Oauth authorization succeeds, the account service device returns access configuration information to the configurator.

The access configuration information may include the first access token of the user account, the first user identifier of the user account, or both.

Further, before using the user account to log in to the account service device, the configurator may be registered with the account service device, and after the registration succeeds, the account service device may store the user account, the first access token, and the first user identifier accordingly. Here, the first access token and the first user identifier may be allocated by the account service device during the registration process. In this way, the configurator can use the registered user account to log in.

In addition, it is to be noted that if the first access token has a validity period, the user needs to request the account service device for update via the configurator before the first access token expires.

At step 202, the configurator transmits an access instruction message to an IoT device. The access instruction message carries at least the access configuration information and is used for instructing the IoT device to be registered with a cloud platform based on the access configuration information.

After the configurator has logged in to the user account or performed the Oauth authorization successfully, it can transmit the access instruction message carrying the access configuration information to the IoT device to be registered to instruct the IoT device to be registered with the cloud platform.

Further, the access instruction message may further carry a cloud platform access Uniform Resource Identifier (URI) and a cloud platform identifier which may be used to uniquely identify the cloud platform. The cloud platform access URI and the cloud platform identifier may be stored in the configurator in advance by the user, or may be acquired from the cloud platform in advance by the configurator, and the present disclosure is not limited to any of these examples.

Further, when the above access configuration information is provided by a third-party account service device, the access instruction message may further carry authorized provider information, which may be e.g., a name of the authorized provider.

At step 203, the cloud platform receives a first registration request from an IoT device. The first registration request carries the access configuration information and a target device identifier of the IoT device. The access configuration information is provided by the configurator for the IoT device. The access configuration information includes the first access token and/or the first user identifier of the user account used by the configurator.

After receiving the access instruction message from the configurator, the IoT device transmits the first registration request to the cloud platform, and includes the access configuration information and its own target device identifier in the first registration request. As an example, the configurator may transmit the first registration request to the corresponding cloud platform based on the cloud platform access URI and the cloud platform identifier.

Further, when the access instruction message further carries the authorized provider information, the first registration request may further carry the authorized provider information.

At step 204, the cloud platform determines a user identifier to be associated based on the access configuration information.

After receiving the first registration request, the cloud platform can determine, based on the access configuration information, a user identifier to be associated for associating with the target device identifier.

It can be appreciated that when the access configuration information includes the first access token, the cloud platform can determine the user identifier to be associated based on the first access token. When the access configuration information includes the first user identifier, the cloud platform can determine the user identifier to be associated based on the first user identifier. When the access configuration information includes the first access token and the first user identifier, the cloud platform can determine the user identifier to be associated based on the first user identifier and the first access token.

It is to be noted that, if the first registration request further includes the authorized provider information, before determining the user identifier to be associated, it may be needed to request the account service device to verify the authorized provider information, and after the information is verified, the above step can be performed.

At step 205, the cloud platform associates the user identifier to be associated with the target device identifier.

After the user identifier to be associated is determined, the user identifier to be associated is associated with the target device identifier. In this way, the registration of the IoT device is achieved.

Further, after associating the user identifier to be associated with the target device identifier, the cloud platform can further return a registration success notification to the IoT device, such that the IoT device can determine whether the registration is successful.

Further, the cloud platform can further transmit the user identifier to be associated to the IoT device, for example, the user identifier to be associated can be carried in the registration success notification.

In addition, the cloud platform can further allocate a second access token to the IoT device, and transmit the allocated second access token to the IoT device. The second access token can be used for validity verification of the IoT device. That is, it can be used to further verify the validity of the IoT device in the subsequent traffic interaction process.

In addition, in the subsequent process, other IoT devices associated with the user account may also be associated with the user identifier to be associated, and the specific implementation principle is the same as the above.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

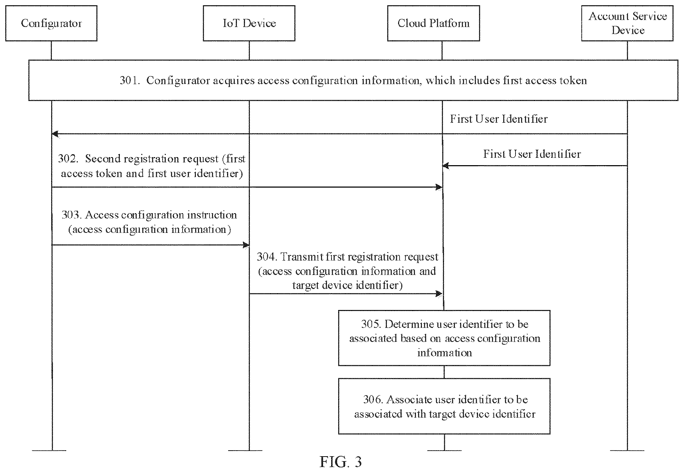

Referring to FIG. 3, which is a flowchart illustrating an IoT device registration method according to another embodiment, the IoT device registration method can be applied to the implementation environment shown in FIG. 1. The method can include the following implementation steps.

At step 301, a configurator acquires access configuration information, which includes a first access token of a user account used by the configurator.

In an implementation, the configurator may log in to the user account or perform Oauth authorization in an account service device. For specific implementation, reference can be made to the step 201 in the embodiment of FIG. 2 above. After the login or Oauth authorization has succeeded, the configurator can acquire the first access token of the user account provided by the account service device. In addition, here, the account service device further transmits a first user identifier of the user account to the configurator.

It is to be noted that, the configurator may acquire the first access token and the first user identifier from the account service device together or separately, and the embodiment of the present disclosure is not limited to any of these examples.

At step 302, the configurator is registered with a cloud platform based on the first access token and the first user identifier.

In an implementation, the cloud platform receives a second registration request from the configurator. The second registration request carries the first access token and the first user identifier. The first access token is transmitted to the account service device for verification. In response to receiving a message indicating that the first access token is verified, the user identifier to be associated is generated. A correspondence between the first user identifier and the user identifier to be associated is stored at a specified storage location.

Here, the specified storage location may be a certain storage location in the cloud platform. For example, it may be a database in the cloud platform. Alternatively, the specified storage location may be another entity that has a connection with the cloud platform. The present disclosure is not limited to any of these examples.

That is, after acquiring the first access token, the configurator can initiate the second registration request to the cloud platform to request registration with the cloud platform. In this process, the configurator can transmit the first access token and the first user identification acquired from the account service device to the cloud platform. For the cloud platform, the first access token is transmitted to the account service device for verification. If the verification by the account service device succeeds, it means that the first access token is valid. In this case, the account service device returns a message indicating that the first access token is verified. After receiving the message, the cloud platform can determine that the configurator can be registered, and therefore, generate the user identifier to be associated, and store it at the specified storage location in association with the first user identifier. Further, the cloud platform can return a registration success message to the configurator to notify the configurator that the registration has been completed.

It is to be noted that the above specific implementation of storing the correspondence between the first user identifier and the user identifier to be associated at the specified storage location is only exemplary, and in another embodiment, other methods may be used to store the correspondence between the first user identifier and the user identifier to be associated at the specified storage location, and the embodiment of the present disclosure is not limited to any of these examples.

At step 303, the configurator transmits an access instruction message to the IoT device. The access instruction message carries the access configuration information.

Further, the access instruction message may further carry a cloud platform access URI and a cloud platform identifier.

Further, when the above access configuration information is provided by a third-party account service device, the access instruction message may further carry authorized provider information, which may be e.g., a name of the authorized provider.

Exemplarily, the access instruction message may include the following content:

```
 UPDATE /oic/coapcloudconfURI
 {
 "at":"Aliz3DUe4vuNAlSblExfbGxmp",
 "cis":"coaps+tcp://example.com:443",
 "sid":"987e6543-a21f-10d1-a112-421345746237",
 "apn":"github"
 }
```

Here, at represents the first access token, cis represents the cloud platform access URI, sid represents the cloud platform identifier, and apn represents the authorized provider information.

At step 304, the cloud platform receives a first registration request from the IoT device. The first registration request carries the access configuration information and a target device identifier of the IoT device.

After receiving the access instruction message from the configurator, the IoT device transmits the first registration request to the cloud platform, and includes the access configuration information and its own target device identifier in the first registration request. As an example, the configurator may transmit the first registration request to the corresponding cloud platform based on the cloud platform access URI and the cloud platform identifier.

Further, when the access instruction message further carries the authorized provider information, the first registration request may further carry the authorized provider information.

Exemplarily, the first registration request may include the following content:

```
UPDATE /oic/sec/account
 {
 "di": "336917bc-24d4-4f05-8e7f-e27ccb4adb48",
 "accesstoken":"43643ed0-4956-4b2f-4ae5-768419fc7d7f",
 "apn":"github"
 }
```

Here, di represents the target device identifier, and accesstoken represents the first access token.

At step 305, the cloud platform determines the user identifier to be associated based on the access configuration information.

As an example, a correspondence between the first user identifier and the user identifier to be associated may be stored at a specified storage location. In this case, the specific implementation of this step may include: acquiring the first user identifier from an account service device based on the first access token; and determining the user identifier to be associated corresponding to the first user identifier based on the correspondence at the specified storage location.

Here, in order to verify whether the first access token is valid, the cloud platform may transmit the first access token to the account service device for verification, and request the account service device to feed back the first user identifier of the user account. Since the account service device locally stores the correspondence between the user account, the first access token, and the first user identifier, the account service device may return the first user identifier after verifying that the first access token is valid.

As described above, when the configurator is registered, the cloud platform allocates the user identifier to be associated, and stores the first user identifier and the user identifier to be associated at the specified storage location. Therefore, after acquiring the first user identifier, the cloud platform checks at the specified storage location whether there is a user identifier to be associated corresponding to the first user identifier, and if so, determines the user identifier to be associated.

It is to be noted that, if the first registration request further includes the authorized provider information, before determining the user identifier to be associated, it may be needed to request the account service device to verify the authorized provider information, and after the information is verified, the above step can be performed.

At step 306, the cloud platform associates the user identifier to be associated with the target device identifier.

For its specific implementation, reference may be made to the step 205 in the above embodiment, and details thereof will be omitted here.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

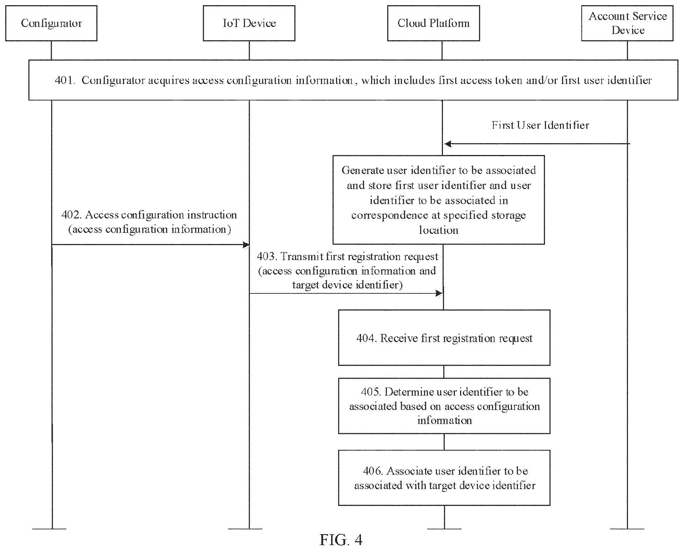

Referring to FIG. 4, which is a flowchart illustrating an IoT device registration method according to another exemplary embodiment. The method can be applied in the implementation environment shown in FIG. 1. The method can include the following implementation steps.

At step 401, a configurator acquires access configuration information. The access configuration information includes a first access token and/or a first user identifier of a user account used by the configurator.

For its specific implementation, reference can be made to the step 201 in the above embodiment of FIG. 2.

In addition, the account service device may transmit the first user identifier of the user account to a cloud platform. Correspondingly, the cloud platform may receive the first user identifier transmitted by an account service device, and store the first user identifier at a specified storage location.

Here, the specified storage location may be a certain storage location in the cloud platform, or may refer to an entity having a connection with the cloud platform.

In fact, the cloud platform directly stores the first user identifier at the specified storage location. In this way, the configurator does not need to be registered in the subsequent process, nor does the configurator need to be allocated with a new user identifier. For example, this implementation may be applied when the cloud platform and the account service device are managed by the same provider. In this way, the registration process of the configurator can be saved, thereby reducing the registration process of the IoT device.

At step 402, the configurator transmits an access instruction message to an IoT device. The access instruction message carries the access configuration information.

Further, the access instruction message may further carry a cloud platform access URI, a cloud platform identifier, and the like. In addition, the access instruction message may further carry authorized provider information.

Exemplarily, the access instruction message transmitted by the configurator to the IoT device may include the following content:

```
UPDATE /oic/coapcloudconfURI
 {
 "uid":"336917bc-24d4-4f05-8e7f-e27ccb4adb48",
 "at":"Aliz3DUe4vuNAlSblExfbGxmp",
 "cis":"coaps+tcp://example.com:443",
 "sid":"987e6543-a21f-10d1-a112-421345746237",
 "apn":"github"
 }
```

Here, uid represents the first user identifier of the user account, at represents the first access token, cis represents the cloud platform access URI, sid represents the cloud platform identifier, and apn represents the authorized provider information.

At step 403, the IoT device transmits a first registration request to the cloud platform. The first registration request carries the access configuration information and a target device identifier of the IoT device.

In an implementation, the IoT device may transmit the first registration request to the cloud platform based on the cloud platform access URI and the cloud platform identifier.

At step 404, the cloud platform receives the first registration request from the IoT device.

Exemplarily, the first registration request may include the following content:

```
UPDATE /oic/sec/account
 {
 "uid":"336917bc-24d4-4f05-8e7f-e27ccb4adb48",
 "di":"336917bc-24d4-4f05-8e7f-e27ccb4adb48",
 "accesstoken":"43643ed0-4956-4b2f-4ae5-768419fc7d7f",
 "apn":"github"
 }
```

Here, accesstoken represents the first access token, and di represents the target device identifier.

At step 405, the cloud platform determines the user identifier to be associated based on the access configuration information.

In this implementation, the user identifier to be associated may be the first user identifier, and the specific implementation of determining the user identifier to be associated based on the access configuration information may include the following possible schemes.

Scheme 1: The access configuration information includes the first user identifier. It is determined whether the first user identifier is stored at a specified storage location. The first user identifier is determined as the user identifier to be associated when the first user identifier is stored at the specified storage location.

As described above, since the first user identifier is stored at the specified storage location, after receiving the first user identifier, the cloud platform can directly check the specified storage location. If the first user identifier is found, meaning that the account service device has transmitted the first user identifier to the cloud platform in advance, the first user identifier can be directly determined as the user identifier to be associated.

Scheme 2: The access configuration information includes the first access token and the first user identifier, and the first access token is transmitted to the account service device for verification. In response to receiving a message indicating that the first access token is verified, it is determined whether the first user identifier is stored at a specified storage location. The first user identifier is determined as the user identifier to be associated when the first user identifier is stored at the specified storage location.

That is, when the access configuration information further includes the first access token, the cloud platform transmits the first access token to the account service device for verification. If the first access token is verified, the account service device returns a message indicating that the first access token is verified. In this case, the cloud platform checks whether the first user identifier is stored at the specified storage location. If so, it means that the account service device has transmitted the first user identifier to the cloud platform in advance, and the first user identifier can be determined as the user identifier to be associated.

Scheme 3: When the access configuration information includes the first access token, an identifier acquisition request is transmitted to an account service device. The identification acquisition request contains the first access token and is used for instructing the account service device to feed back a corresponding first user identifier based on the first access token. In response to receiving the first user identifier, it is determined whether the first user identifier is stored at the specified storage location. When the first user identifier is stored at the specified storage location, the first user identifier is determined as the user identifier to be associated.

In this implementation, the access configuration information does not include the first user identifier, but only includes the first access token. In this case, the cloud platform can generate an identifier acquisition request based on the first access token, and then transmit the identity acquisition request to the account service device. The account service device verifies the first access token, and if the verification succeeds, acquires the first user identifier of the user account, and feeds back the first user identifier to the cloud platform. After acquiring the first user identifier, the cloud platform determines the first user identifier as the user identifier to be associated when the first user identifier is determined to be stored at the specified storage location.

At step 406, the user identifier to be associated is associated with the target device identifier.

For its specific implementation, reference may be made to the step 205 in the above embodiment, and details thereof will be omitted here.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

As another example, the present disclosure also provides an IoT device registration method. The method can be applied in the implementation environment shown in FIG. 1 above. The method can include the following implementation steps.

At step A, a configurator acquires access configuration information. The access configuration information includes a first access token and/or a first user identifier of a user account used by the configurator.

For its specific implementation, reference can be made to the step 201 in the above embodiment of FIG. 2.

In addition, the account service device transmits the first user identifier to a cloud platform. Correspondingly, the cloud platform receives the first user identifier transmitted by an account service device, generates a user identifier to be associated based on the first user identifier, and stores a correspondence between the first user identifier and the user identifier to be associated at a specified storage location.

That is, in this implementation, after receiving the first user identifier, the cloud platform can generate a new user identifier to be associated corresponding to it, and store the correspondence between the two at a specified storage location.

At step B, the configurator transmits an access instruction message to an IoT device. The access instruction message carries the access configuration information.

For its specific implementation, reference can be made to the step 402 in the above embodiment of FIG. 4.

At step C, the IoT device transmits a first registration request to the cloud platform. The first registration request carries the access configuration information and a target device identifier of the IoT device.

For its specific implementation, reference can be made to the step 403 in the above embodiment of FIG. 4.

At step D, the cloud platform receives the first registration request from the IoT device.

At step E, the cloud platform determines a user identifier to be associated based on the access configuration information.

As described herein, a correspondence between the first user identifier and the user identifier to be associated is stored at a specified storage location. In this case, this step may include the following possible implementation schemes.

Scheme 1: When the access configuration information includes the first user identifier, the user identifier to be associated corresponding to the first user identifier is determined at the specified storage location.

As described above, after the account service device transmits the first user identifier to the cloud platform, the cloud platform generates the user identifier to be associated corresponding to the first user identifier, and stores the correspondence between the two at the specified storage location. Therefore, after receiving the first registration request transmitted by the IoT device, if the first registration request carries the first user identifier, it may be checked whether there is user identifier to be associated corresponding to the first user identifier from the correspondence stored at the specified storage location. If so, it is determined that the user identifier to be associated is acquired.

Scheme 2: When the access configuration information includes the first access token and the first user identifier, the first access token is transmitted to the account service device for verification, and in response to receiving a message indicating that the first access token is verified, the user identifier to be associated corresponding to the first user identifier is determined at the specified storage location.

That is, unlike the above Scheme 1, if the access configuration information further includes the first access token, the cloud platform needs to verify the validity of the first access token via the account service device, and only when the verification has succeeded, the operations, such as the checking operation, can be performed.

At step F, the user identifier to be associated is associated with the target device identifier.

For its specific implementation, reference can be made to the step 406 in the above embodiment of FIG. 4.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

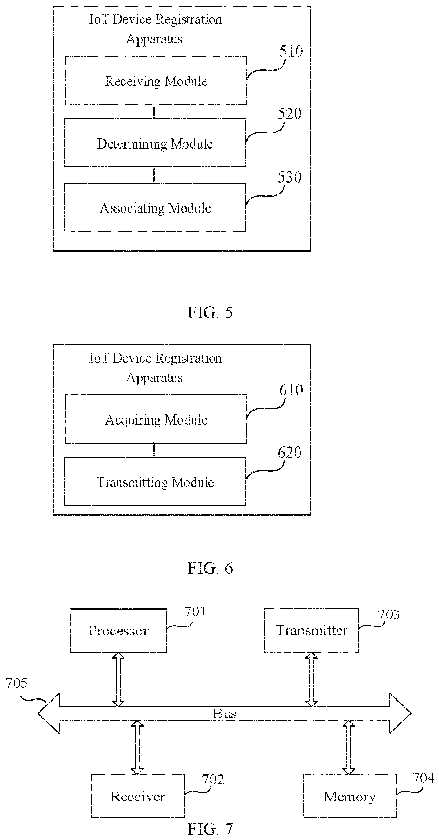

FIG. 5 is a schematic diagram showing a structure of an IoT device registration apparatus according to an exemplary embodiment. The apparatus may include:
a receiving module 510 configured to a first registration request from an IoT device, the first registration request carrying access configuration information and a target device identifier of the IoT device, the access configuration information being provided by a configurator for the IoT device, the access configuration information comprising a first access token and/or a first user identifier of a user account used by the configurator;
a determining module 520 configured to determine a user identifier to be associated based on the access configuration information; and
an associating module 530 configured to associate the user identifier to be associated with the target device identifier.

In a possible implementation of the present disclosure, the access configuration information may include the first access token, and a correspondence between the first user identifier and the user identifier to be associated may be stored at a specified storage location. The determining module 520 may be configured to: acquire the first user identifier from an account service device based on the first access token; and determine the user identifier to be associated corresponding to the first user identifier based on the correspondence at the specified storage location.

In a possible implementation of the present disclosure, the associating module 530 may be further configured to: receive a second registration request from the configurator, the second registration request carrying the first access token and the first user identifier; transmit the first access token to the account service device for verification; generate the user identifier to be associated in response to receiving a message indicating that the first access token is verified; and store the correspondence between the first user identifier and the user identifier to be associated at the specified storage location.

In a possible implementation of the present disclosure, the user identifier to be associated may be the first user identifier, and the access configuration information may include the first user identifier. The determining module 520 may be configured to: determine whether the first user identifier is stored at a specified storage location; and determine the first user identifier as the user identifier to be associated when the first user identifier is stored at the specified storage location.

In a possible implementation of the present disclosure, the user identifier to be associated may be the first user identifier, and the access configuration information may include the first access token and the first user identifier. The determining module 520 may be configured to: transmit the first access token to an account service device for verification; determine whether the first user identifier is stored at a specified storage location in response to receiving a message indicating that the first access token is verified; and determine the first user identifier as the user identifier to be associated when the first user identifier is stored at the specified storage location.

In a possible implementation of the present disclosure, the user identifier to be associated may be the first user identifier, and the access configuration information may include the first access token. The determining module 520 may be configured to: transmit an identifier acquisition request to an account service device, the identification acquisition request containing the first access token and being used for instructing the account service device to feed back a corresponding first user identifier based on the first access token; determine whether the first user identifier is stored at the specified storage location in response to receiving the first user identifier; and determine the first user identifier as the user identifier to be associated when the first user identifier is stored at the specified storage location.

In a possible implementation of the present disclosure, the associating module 530 may be further configured to: receive the first user identifier transmitted by the account service device; and store the first user identifier at the specified storage location.

In a possible implementation of the present disclosure, the access configuration information may include the first user identifier, and a correspondence between the first user identifier and the user identifier to be associated may be stored at a specified storage location. The determining module 520 may be configured to: determine the user identifier to be associated corresponding to the first user identifier at the specified storage location.

In a possible implementation of the present disclosure, the access configuration information may include the first access token and the first user identifier, and a correspondence between the first user identifier and the user identifier to be associated may be stored at a specified storage location. The determining module 520 may be configured to: transmit the first access token to an account service device for verification; and determine the user identifier to be associated corresponding to the first user identifier at the specified storage location in response to receiving a message indicating that the first access token is verified.

In a possible implementation of the present disclosure, the associating module 530 may be further configured to: receive the first user identifier transmitted by an account service device; generate the user identifier to be associated based on the first user identifier; and store the correspondence between the first user identifier and the user identifier to be associated at the specified storage location.

In a possible implementation of the present disclosure, the associating module 530 may be further configured to: transmit the user identifier to be associated to the IoT device.

In a possible implementation of the present disclosure, the associating module 530 may be further configured to: allocate a second access token to the IoT device, the second access token being used for validity verification of the IoT device; and transmit the second access token to the IoT device.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

FIG. 6 shows an IoT device registration apparatus according to an exemplary embodiment. The apparatus may include:
an acquiring module 610 configured to acquire access configuration information, the access configuration information comprising a first access token and/or a first user identifier of a user account used by the configurator; and
a transmitting module 620 configured to transmit an access instruction message to an IoT device, the access instruction message carrying at least the access configuration information and being used for instructing the IoT device to be registered with a cloud platform based on the access configuration information.

In a possible implementation of the present disclosure, the acquiring module 610 may be configured to: log in or perform third-party authorization and authentication in an account service device based on the user account; and receive the access configuration information transmitted by the account service device.

In the embodiment of the present disclosure, a first registration request from an IoT device is received. The first registration request carries access configuration information and a target device identifier of the IoT device. The access configuration information is provided by a configurator for the IoT device, and includes a first access token and/or a first user identifier of a user account used by the configurator. That is, there is no need for the configurator to request a configurator access token or device access token from a cloud platform, and a user identifier to be associated can be determined directly based on the first access token and/or the first user identifier of the user account, and the user identifier to be associated can be associated with the target device identifier to complete the registration, thereby reducing the registration process and improving the registration efficiency.

FIG. 7 is a schematic diagram showing a structure of a device according to an exemplary embodiment of the present disclosure. The device can be the above cloud platform or the above configurator. The device includes: a processor 701, a receiver 702, a transmitter 703, a memory 704, and a bus 705.

The processor 701 includes one or more processing cores, and the processor 701 is configured to perform various functional applications and information processing by executing software programs and modules.

The receiver 702 and the transmitter 703 may be implemented as a communication component, which may be a communication chip.

The memory 704 is connected to the processor 701 via the bus 705.

The memory 704 may be configured to store at least one instruction, and the processor 701 is configured to execute the at least one instruction, so as to implement the steps performed by the device in any of the above method embodiments.

In addition, the memory 704 may be implemented by any type of volatile or non-volatile storage device or any combination thereof. The volatile or non-volatile storage devices include but are not limited to: magnetic disk or optical disc, Electrically Erasable Programmable Read-Only Memory (EEPROM), Erasable Programmable Read-Only Memory (EPROM), Static Random-Access Memory (SRAM), Read-Only Memory (ROM), magnetic memory, flash memory, Programmable Read-Only Memory (PROM), etc.

The present disclosure provides a computer-readable storage medium. The storage medium has at least one instruction stored therein. The at least one instruction can be loaded and executed by the processor to implement the method according to any of the above method embodiments.

The present disclosure also provides a computer program product, which, when executed on a computer, enables the computer to perform the method according to any of the above method embodiments.

It can be appreciated by those of ordinary skill in the art that all or part of the steps in the above embodiment can be implemented by hardware, or by a program instructing relevant hardware. The program can be stored in a computer-readable storage medium, which can be a read-only memory, a magnetic disk or an optical disc, etc.

While the preferred embodiments of the present disclosure have been described above, they are not intended to limit the present disclosure. Any modifications, equivalents, or improvements that can be made within the spirit and principle of the present disclosure are to be encompassed by the scope of the present disclosure.

## Claims

1. An Internet-of-Things (IoT) device registration method, applied in a cloud platform, the method comprising:
receiving a first registration request from an IoT device, the first registration request carrying access configuration information and a target device identifier of the IoT device, the access configuration information being provided by a configurator for the IoT device, the access configuration information comprising a first access token and/or a first user identifier of a user account used by the configurator;
determining a user identifier to be associated based on the access configuration information; and
associating the user identifier to be associated with the target device identifier.

2. The method according to claim 1, wherein the access configuration information comprises the first access token, and a correspondence between the first user identifier and the user identifier to be associated is stored at a specified storage location, and
said determining the user identifier to be associated based on the access configuration information comprises:
acquiring the first user identifier from an account service device based on the first access token; and
determining the user identifier to be associated corresponding to the first user identifier based on the correspondence at the specified storage location.

3. The method according to claim 2, further comprising:
receiving a second registration request from the configurator, the second registration request carrying the first access token and the first user identifier;
transmitting the first access token to the account service device for verification;
generating the user identifier to be associated in response to receiving a message indicating that the first access token is verified; and
storing the correspondence between the first user identifier and the user identifier to be associated at the specified storage location.

4. The method according to claim 1, wherein the user identifier to be associated is the first user identifier, and the access configuration information comprises the first user identifier, and
said determining the user identifier to be associated based on the access configuration information comprises:
determining whether the first user identifier is stored at a specified storage location; and
determining the first user identifier as the user identifier to be associated when the first user identifier is stored at the specified storage location.

5. The method according to claim 1, wherein the user identifier to be associated is the first user identifier, and the access configuration information comprises the first access token and the first user identifier, and
said determining the user identifier to be associated based on the access configuration information comprises:
transmitting the first access token to an account service device for verification;
determining whether the first user identifier is stored at a specified storage location in response to receiving a message indicating that the first access token is verified; and
determining the first user identifier as the user identifier to be associated when the first user identifier is stored at the specified storage location.

6. The method according to claim 1, wherein the user identifier to be associated is the first user identifier, and the access configuration information comprises the first access token, and
said determining the user identifier to be associated based on the access configuration information comprises:
transmitting an identifier acquisition request to an account service device, the identification acquisition request containing the first access token and being used for instructing the account service device to feed back a corresponding first user identifier based on the first access token;
determining whether the first user identifier is stored at the specified storage location in response to receiving the first user identifier; and
determining the first user identifier as the user identifier to be associated when the first user identifier is stored at the specified storage location.

7. The method according to any of claims 4 to 6, further comprising:
receiving the first user identifier transmitted by an account service device; and
storing the first user identifier at the specified storage location.

8. The method according to claim 1, wherein the access configuration information comprises the first user identifier, and a correspondence between the first user identifier and the user identifier to be associated is stored at a specified storage location, and
said determining the user identifier to be associated based on the access configuration information comprises:
determining the user identifier to be associated corresponding to the first user identifier at the specified storage location.

9. The method according to claim 1, wherein the access configuration information comprises the first access token and the first user identifier, and a correspondence between the first user identifier and the user identifier to be associated is stored at a specified storage location, and
said determining the user identifier to be associated based on the access configuration information comprises:
transmitting the first access token to an account service device for verification; and
determining the user identifier to be associated corresponding to the first user identifier at the specified storage location in response to receiving a message indicating that the first access token is verified.

10. The method according to claim 8 or 9, further comprising:
receiving the first user identifier transmitted by an account service device;
generating the user identifier to be associated based on the first user identifier; and
storing the correspondence between the first user identifier and the user identifier to be associated at the specified storage location.

11. The method according to any of claims 1 to 10, further comprising:
transmitting the user identifier to be associated to the IoT device.

12. The method according to claim 11, further comprising:
allocating a second access token to the IoT device, the second access token being used for validity verification of the IoT device; and
transmitting the second access token to the IoT device.

13. An Internet-of-Things (IoT) device registration method, applied in a configurator, the method comprising:
acquiring access configuration information, the access configuration information comprising a first access token and/or a first user identifier of a user account used by the configurator; and
transmitting an access instruction message to an IoT device, the access instruction message carrying at least the access configuration information and being used for instructing the IoT device to be registered with a cloud platform based on the access configuration information.

14. The method according to claim 13, wherein said acquiring the access configuration information comprises:
logging in or performing third-party authorization and authentication in an account service device based on the user account; and
receiving the access configuration information transmitted by the account service device.

15. An Internet-of-Things (IoT) device registration apparatus,applied in a cloud platform, the apparatus comprising:
a receiving module configured to receive a first registration request from an IoT device, the first registration request carrying access configuration information and a target device identifier of the IoT device, the access configuration information being provided by a configurator for the IoT device, the access configuration information comprising a first access token and/or a first user identifier of a user account used by the configurator;
a determining module configured to determine a user identifier to be associated based on the access configuration information; and
an associating module configured to associate the user identifier to be associated with the target device identifier.

16. The apparatus according to claim 15, wherein the access configuration information comprises the first access token, and a correspondence between the first user identifier and the user identifier to be associated is stored at a specified storage location, and
the determining module is configured to:
acquire the first user identifier from an account service device based on the first access token;and
determine the user identifier to be associated corresponding to the first user identifier based on the correspondence at the specified storage location.

17. The apparatus according to claim 16, wherein the associating module is further configured to:
receive a second registration request from the configurator, the second registration request carrying the first access token and the first user identifier;
transmit the first access token to the account service device for verification;
generate the user identifier to be associated in response to receiving a message indicating that the first access token is verified; and
store the correspondence between the first user identifier and the user identifier to be associated at the specified storage location.

18. The apparatus according to claim 15, wherein the user identifier to be associated is the first user identifier, and the access configuration information comprises the first user identifier, and
the determining module is configured to:
determine whether the first user identifier is stored at a specified storage location; and
determine the first user identifier as the user identifier to be associated when the first user identifier is stored at the specified storage location.

19. The apparatus according to claim 15, wherein the user identifier to be associated is the first user identifier, and the access configuration information comprises the first access token and the first user identifier, and
the determining module is configured to:
transmit the first access token to an account service device for verification;
determine whether the first user identifier is stored at a specified storage location in response to receiving a message indicating that the first access token is verified; and
determine the first user identifier as the user identifier to be associated when the first user identifier is stored at the specified storage location.

20. The apparatus according to claim 15, wherein the user identifier to be associated is the first user identifier, and the access configuration information comprises the first access token, and
the determining module is configured to:
transmit an identifier acquisition request to an account service device, the identification acquisition request containing the first access token and being used for instructing the account service device to feed back a corresponding first user identifier based on the first access token;
determine whether the first user identifier is stored at the specified storage location in response to receiving the first user identifier; and
determine the first user identifier as the user identifier to be associated when the first user identifier is stored at the specified storage location.

21. The apparatus according to any of claims 18-20, wherein the associating module is further configured to:
receive the first user identifier transmitted by an account service device; and
store the first user identifier at the specified storage location.

22. The apparatus according to claim 15, wherein the access configuration information comprises the first user identifier, and a correspondence between the first user identifier and the user identifier to be associated is stored at a specified storage location, and
the determining module is configured to:
determine the user identifier to be associated corresponding to the first user identifier at the specified storage location.

23. The apparatus according to claim 15, wherein the access configuration information comprises the first access token and the first user identifier, and a correspondence between the first user identifier and the user identifier to be associated is stored at a specified storage location, and
the determining module is configured to:
transmit the first access token to an account service device for verification; and
determine the user identifier to be associated corresponding to the first user identifier at the specified storage location in response to receiving a message indicating that the first access token is verified.

24. The apparatus according to claim 22 or 23, wherein the associating module is further configured to:
receive the first user identifier transmitted by an account service device;
generate the user identifier to be associated based on the first user identifier; and
store the correspondence between the first user identifier and the user identifier to be associated at the specified storage location.

25. The method according to any of claims 15 to 24, wherein the associating module is further configured to:
transmit the user identifier to be associated to the IoT device.

26. The apparatus according to claim 25, wherein the associating module is further configured to:
allocate a second access token to the IoT device, the second access token being used for validity verification of the IoT device; and
transmit the second access token to the IoT device.

27. An Internet-of-Things (IoT) device registration apparatus, applied in a configurator, the apparatus comprising:
an acquiring module configured to acquire access configuration information, the access configuration information comprising a first access token and/or a first user identifier of a user account used by the configurator; and
a transmitting module configured to transmit an access instruction message to an IoT device, the access instruction message carrying at least the access configuration information and being used for instructing the IoT device to be registered with a cloud platform based on the access configuration information.

28. The apparatus according to claim 27, wherein the acquiring module is configured to:
log in or perform third-party authorization and authentication in an account service device based on the user account; and
receive the access configuration information transmitted by the account service device.

29. A device, comprising a processor and a memory, the memory storing at least one instruction executable by the processor to implement the method according to any of claims 1 to 12 or the method according to claim 13 or 14.

30. A computer-readable storage medium, storing at least one instruction executable by the processor to implement the method according to any of claims 1 to 12 or the method according to claim 13 or 14.
